Europäisches Patentamt

European Patent Office

Office européen des brevets

(11) Numéro de publication: **0 414 592 A1**

# DEMANDE DE BREVET EUROPEEN

(21) Numéro de dépôt: 90402293.6

(22) Date de dépôt: **14.08.90**

(51) Int. Cl.⁵: **C09K 3/32**

(30) Priorité: **14.08.89 FR 8910867**
**01.12.89 FR 8915908**

(43) Date de publication de la demande:
**27.02.91 Bulletin 91/09**

(84) Etats contractants désignés:
**AT BE CH DE DK ES FR GB GR IT LI LU NL SE**

(71) Demandeur: **Gerard, Max**
**Oisy**
**F-58500 Clamecy(FR)**

Demandeur: **Megret, épouse Gerard, Iréne**
**Oisy**
**F-58500 Clamecy(FR)**

(72) Inventeur: **Gerard, Max**
**Oisy**
**F-58500 Clamecy(FR)**
Inventeur: **Megret, épouse Gerard, Iréne**
**Oisy**
**F-58500 Clamecy(FR)**

(74) Mandataire: **Wagret, Jean-Michel**
**23 rue de Léningrad**
**F-75008 Paris(FR)**

(54) **Produit et procédé pour resorber une pollution, notamment par les hydrocarbures.**

(57) - Procédé pour résorber une pollution résultant notamment de la présence indésirable d'hydrocarbures ou de liquides fortement chargés, telles des eaux résiduaires, éventuellement déversés sur un milieu liquide ou solide, dans lequel on répand à la surface du milieu pollué du sulfate de calcium au moins partiellement déshydraté et le procédé est caractérisé en ce qu'on utilise un sulfate de calcium provenant de la déshydratation au moins partielle du gypse naturel et conduit à un degré de déshydratation convenable par traitement thermique à une température comprise entre 100 et 170° et de préférence entre 130 et 145° C;
Le produit reduit a une granulometrie comportant une majorité de particules entre 2 et 50 microns est repandu sur la surface a traiter et donne un agregat sableux facile a pelleter sur terre ou qui précipite sur milieu liquide. L'invention concerne egalement le produit destiné à la mise en oeuvre du procédé.

## PRODUIT ET PROCEDE POUR RESORBER UNE POLLUTION, NOTAMMENT PAR LES HYDROCARBURES

La présente invention concerne un procédé en vue de resorber une pollution sur terre ou en milieu liquide (marin ou en eau douce) et provenant de la dispersion d'hydrocarbures à la surface des eaux ou du déversement de liquides polluants, telles des eaux résiduaires.

On connaît le fléau que représente pour la sauvegarde de la flore et de la faune l'apparition, généralement brutale et catastrophique, d'une quantité d'hydrocarbures répandus accidentellement à la surface des eaux.

Le plus fréquemment cet accident est à déplorer à la surface des eaux maritimes, généralement à proximité des côtes (que suivent les navires pétroliers) et par suite de circonstances dramatiques tels que naufrages, échouages, collisions etc. et qui aboutissent à un désastre écologique et économique.

Mais ce type d'accident se produit également, bien qu'avec des dimensions généralement moins importantes, à l'intérieur des terres, par exemple à l'occasion de la rupture d'une citerne ou d'une fausse manoeuvre, provoquant l'écoulement de réserve d'hydrocarbures dans des plans d'eau ou dans des cours d'eau, ou encore sur une route, un parking etc...

Et l'accroissement mondial de la consommation d'hydrocarbures avec l'accroissement exponentiel qui en résulte dans les manipulations de ces produits, tend malheureusement à multiplier les risques et par conséquent à augmenter chaque année le nombre de sinistres.

On a sans doute cherché à développer de nombreux procédés et des produits spécifiques destinés à permettre de lutter contre les pollutions d'hydrocarbures répandus à la surface des eaux.

Notamment on cherche de façon conventionnelle à édifier des barrages flottants, ou encore à mettre en place à la surface des eaux polluées des engins circulants visant à absorber ou résorber une partie du liquide polluant.

On a également proposé de nombreux produits destinés à être répandus à la surface des eaux polluées pour tenter d'annihiler ou de neutraliser les effets nocifs des hydrocarbures polluants.

Le brevet français publié n° 1.570.245 propose ainsi de déverser des matières poreuses tel le béton cellulaire.

Le brevet européen publié n° 006.776 envisage l'utilisation de semi-hydrates de sulfate de calcium sous la forme $\alpha$ de préférence rendu absorbant par incorporation de tourbe, le sulfate de calcium gâché par mélange avec l'eau forme une croûte superficielle.

L'expérience cependant montre que ces moyens ne sont pas à la mesure des dimensions de la catastrophe, lorsque des milliers de tonnes de pétrole brut sont répandus en mer ou sur un plan d'eau.

En effet, le facteur temps est ici particulièrement vital notamment dans le cadre de la pollution des côtes maritimes.

Les hydrocarbures déversés et répandus sur les rochers et les plages doivent être nettoyés dans un intervalle de temps restreint qui correspond à l'espace de temps séparant deux marées hautes successives.

Si donc le produit qui est répandu sur la surface du sol (plages, rochers etc..) n'est pas susceptible d'agir efficacement dans cet intervalle de temps, la nouvelle marée ultérieure apportera une perturbation dans le cycle et ne permettra pas la poursuite du phénomène d'absorption et de résorption du produit parasite (hydrocarbures), ceci en plusieurs passes ou épandages successifs.

De sorte que le travail sera pratiquement à refaire.

On en est donc réduit, pour le nettoyage des côtes, à tenter une élimination mécanique par brosse et jets d'eau, qui représente une consommation de main d'oeuvre particulièrement onéreuse, outre qu'elle ne peut être efficace qu'avec l'aide de compositions détergentes dont l'effet sur la flore et la faune reste également particulièrement négatif.

Alors que le produit selon l'invention permet précisément de remédier aux inconvénients des systèmes antérieurs.

A cet effet, l'invention concerne en premier lieu un procédé pour résorber une pollution résultant notamment de la présence indésirable d'hydrocarbures ou de liquides fortement chargés, telles que des eaux résiduaires, éventuellement déversés sur un milieu liquide ou solide, dans lequel on répand à la surface du milieu pollué du sulfate de calcium partiellement déshydraté et le procédé est caractérisé en ce qu'on utilise un sulfate de calcium provenant de la déshydratation partielle du gypse naturel et conduit à un degré de déshydratation convenable par traitement thermique à une température comprise entre 100 et 170° C et de préférence entre 130 et 160° C, et plus spécialement encore entre 140 et 145° C.

Le sulfate de calcium utilisé est déshydraté par un traitement thermique conduit dans les conditions de température ci-dessus définies pendant une durée comprise entre 1 et 4 heures et de préférence comprise entre 1 et 2 Heures, cette durée comportant le rechauffement de la matière depuis la temperature ambiante jusqu'a la temperature de traitement.

Le produit ainsi utilisé est un sulfate de calcium comportant une proportion majoritaire de semihydrate ($Ca\ SO_4,\ 1/2\ H_2O$).

Et ce produit est utilisé à l'état pulvérulent et réduit à une granulométrie comprise entre 1 et 100 microns et de préférence comporte une majorité de particules comprises entre 2 et 50 microns.

Les températures indiquées dans le présent descriptif sont des températures au coeur de la matière, atteinte après la phase de rechauffement.

Le produit de l'invention dérive de la déshydratation partielle du sulfate de calcium mono-hydrate constituant le gypse naturel.

Et l'on sait que par chauffage on abaisse le degré d'hydratation du gypse naturel suivant les réactions connues notamment pour la fabrication de plâtre : (à 400° C)

$$2\ CaSO_4,\ 2\ H_2O \rightleftharpoons 2\ CaSO_4,\ H_2O\ +\ 3\ H_2O$$

Grâce à son affinité exceptionnelle pour les hydrocarbures, le sulfate de calcium semi-hydrate obtenu par les procédés précédemment spécifiés permet dans un espace de temps extrêmement restreint, l'absorption physique de la phase hydrocarbure sur le support constitué du sulfate de calcium à l'état pulvérulent et son agrégation, sans passer par une phase de réhydratation par l'eau, donc sans gachage.

De la sorte, le sulfate de calcium contenant, dans la matrice du support qu'il constitue, la phase liquide d'hydrocarbures, et assurant la rétention des molécules lourdes d'hydrocarbures au sein de ce support, on assiste à un phénomène de piégeage de la phase d'hydrocarbures par la phase solide qui entraine par conséquent une totale neutralisation des hydrocarbures vis-à-vis du milieu.

Le sulfate de calcium semi-hydrate, mis en oeuvre dans le cadre de la présente invention, peut absorber jusqu'à plusieurs fois son propre poids d'hydrocarbures avec formation d'un complexe solide neutre et dépourvu d'agressivité aussi bien physique que chimique vis-à-vis du milieu extérieur.

Dans ces conditions, le procédé selon l'invention loin de vouloir attaquer par des procédés chimiques les molécules d'hydrocarbures, au risque d'entraîner des dégradations secondaires vis-à-vis du milieu, aboutit à la formation d'une roche sableuse, non agressive et qui pourra rester dans le milieu marin ou éventuellement être recueillie par des moyens mécaniques, par exemple sur le bord des plages ou généralement sur la côte.

La roche sableuse ainsi obtenue précipite au fond de l'eau, permettant son élimination sans manipulation, ce qui distingue nettement le produit et le procédé de l'invention de ce qui est décrit dans le brevet européen publié n° 006 776, lequel aboutit à la formation d'une croûte surnageant à la surface.

On sait en effet que le gypse et le sulfate de calcium qui le constitue est une roche naturelle particulièrement disponible à bon marché.

Sa production dispose déjà d'infrastructures existantes, pour la production de plâtre destiné au bâtiment et à la construction et le produit est aisément disponible à faible coût sans entraîner la nécessité de lourds investissements pour assurer une nouvelle fabrication.

Ainsi contrairement aux produits et compositions qui ont été développés et expérimentés précédemment, le produit mis en oeuvre dans le cadre du procédé de la présente invention pourra être immédiatement trouvé à proximité même des lieux d'un sinistre constaté, sans même qu'il soit par aileurs nécessaire de constituer des réserves à cet effet.

Le résultat obtenu par le procédé de l'invention ne comporte par ailleurs aucun résultat secondaire négatif, puisque le produit combattu (hydrocarbures) se trouve enfermé dans la gangue que constitue le réseau des molécules de sulfate de calcium, les hydrocarbures ainsi enfermés dans cette gangue étant dépourvus d'action vis-à-vis du milieu extérieur.

Selon un développement de l'invention, il est proposé d'adapter les caractéristiques et propriétés physiques d'absorption du produit de traitement constitué de sulfate de calcium à l'état pulvérulent et au moins partiellement déshydraté, aux caractéristiques physiques du produit à traiter.

Ces hydrocarbures, sources de pollution, comportent des caractéristiques physiques, notamment des densités, correspondant à leur nombre d'atomes de carbone, très diverses.

Le pétrole brut lui-même est constitué d'un mélange contenant des hydrocarbures très divers et s'il se présente généralement à l'état liquide, il contient en réalité des phases solides (lourdes) et des phases gazeuses (légères) en solution.

Les risques de pollution sur eau ou sur terre proviennent généralement du déversement de mélanges relativement denses et comportant une majorité de fractions lourdes notamment en raison du déversement accidentel de pétrole brut ou de mazout ou plus rarement de gazole ; la pollution peut également résulter du déversement d'hydrocarbures sous forme d'huiles minérales (huiles de lubrification ou huiles de vidange) qui correspondent également à des fractions plus lourdes (à nombre d'atomes de carbone égal ou supérieur à 10) par opposition aux fractions légères résultant notamment du raffinage du brut et utilisé comme carburant automobile.

L'invention vise donc à cibler de façon plus spécifique les pollutions les plus courantes et résultant du déversement de mélanges d'hydrocarbures relativement denses d'une part et d'autre part, à permettre d'ajuster en fonction des caractéristiques de chaque type de pollution, un type de produit de traitement spécifique et répondant de façon efficace à la nécessité d'absorber le produit déterminé.

On comprend que le degré de déshydratation du sulfate de calcium traité thermiquement peut varier au sein de chaque charge.

En effet, la déshydratation résultant du passage du gypse naturel au sulfate de calcium semi-hydrate résulte non d'une perte d'eau de rétention par évaporation, mais d'une réaction chimique dans laquelle chaque molécule de sulfate de calcium perd successivement une demi-molécule d'eau.

Si donc la réaction est en "tout ou rien" au niveau de chaque molécule, la réaction globale au niveau de la charge se poursuit dans le temps et de telle façon qu'en fonction de la température et de la durée du traitement tout ou partie des molécules de sulfate de calcium perdent leur hydratation ou eau chimiquement liée.

On peut donc ainsi, en ajustant la température et la durée, aboutir à un mélange convenablement ajusté de fractions de sulfate de calcium à des degrés d'hydratation différents.

Et l'expérience a révélé que ces fractions de sulfate de calcium, traitées à des degrés de température différentiels, comportaient des réponses également différentes et des degrés d'absorption spécifiques aux diverses phases d'hydrocarbures auxquelles ils ont été confrontés.

C'est ainsi qu'une charge de sulfate de calcium résultant du traitement de gypse naturel (sec et ne comportant donc pas d'eau de rétention) et traitée à une température de 135° pendant 2 heures, peut se révéler particulièrement efficace pour assurer l'absorption d'huiles minérales du type huile de lubrification et correspondant à des fractions d'hydrocarbures relativement lourdes notamment comportant un nombre d'atomes de carbone égal ou supérieur à 10.

Notamment selon une expérimentation à laquelle il a été procédé par les demandeurs, des supports solides constitués notamment de galets, prélevés sur le rivage marin, ont été copieusement arrosés d'huile de vidange et ensuite saupoudrés de sulfate de calcium à l'état semi-hydrate traité à 135° ; l'ensemble a été rejeté en mer en l'état et a été ensuite retiré après séjour d'une durée de 3 minutes ; il a été constaté que les galets retirés ne comportaient aucune trace huileuse et étaient parfaitement nets (offrant même une surface plus propre par rapport à celle présentée avant l'expérimentation) ; alors qu'aucune trace irisée n'apparaissait à la surface de l'eau.

Au terme d'une seconde expérimentation, trois bacs remplis d'eau potable ont subi un déversement d'huile de vidange et chacun des bacs a été traité par le sulfate de calcium semi-hydrate réduit à une granulométrie telle que l'ensemble comporte une majorité de particules de dimensions comprises entre 2 et 50 microns ; chacun des trois bacs a été traité par un type particulier de sulfate de calcium semi-hydrate, ayant subi un traitement de déshydratation respectivement à 140°, 150° et 160°.

Il a été constaté que le sulfate de calcium déshydraté à 140° permettait une résorption totale de la phase d'hydrocarbure répandu à la surface de l'eau, le mélange pulvérulent ayant absorbé la phase d'hydrocarbure précipitant au fond du bac, sans laisser de trace à la surface de l'eau ; le résultat obtenu par le sulfate de calcium semi-hydrate traité à 150° a été satisfaisant, mais moins rapidement que pour le sulfate de calcium déshydraté à 140° ; le bac traité par le sulfate de calcium déshydraté à 160° a donné des résultats satisfaisants mais après quelques jours et après adjonction d'un traitement additionnel.

Il a également été procédé à des essais sur le sol, des hydrocarbures du type huile de vidange et mazout étant répandus sur un terrain peu absorbant (béton, macadam) ; l'hydrocarbure ainsi répandu a été saupoudré de sulfate de calcium semi-hydrate traité à 140 ; le résultat positif a été immédiatement constaté, le sulfate de calcium absorbant l'hydrocarbure et formant un agrégat voisin du gravier ; après quelques minutes, l'agrégat ainsi formé a pu être balayé en dégageant un sol net et propre sans trace graisseuse ou huileuse et sans offrir une surface glissante ; l'expérimentation a été conduite avec les mêmes résultats sur un sol sec et sur un sol humide, ce qui montre bien que le sulfate semi-hydrate absorbe directement les hydrocarbures sans passer par une phase de réhydratation.

On constate donc que le sulfate de calcium dont le degré de déshydratation est obtenu par un traitement thermique voisin de 135 à 140°, permet d'aboutir à un produit dont le degré de mouillabilité par les fractions lourdes d'hydrocarbures est plus élevé.

Tandis que l'on pourra constater expérimentalement que le sulfate de calcium dont la déshydratation a été poussée à une température plus élevée, supérieure à 140°, répondra à un problème d'absorption d'hydrocarbures de densité plus faible.

Il est donc possible, conformément à l'invention, de préparer des réserves de produits correspondant à des charges de sulfate de calcium au moins partiellement déshydraté ayant subi des traitements thermiques à des degrés de température plus ou moins élevés ainsi qu'accessoirement pendant des durées de traitements plus ou moins longs.

Chacune de ces charges de sulfate de calcium partiellement déshydraté comporte des caractéristiques spécifiques offrant des réponses adaptées à des types d'hydrocarbures variés.

En présence d'une pollution, il est donc aisé, ne serait-ce que par tests empiriques, de déterminer celle des charges qui présente les caractéristiques les mieux adaptées et par conséquent utiliser cette fraction spécifique.

Et d'ores et déjà, les essais relatés précédemment montrent que le sulfate de calcium partiellement déshydraté et traité à une température comprise entre 130 à 140°, permet la résorption quasi instantanée d'hydrocarbures liquides correspondant à une majorité de fractions lourdes notamment à nombre d'atomes de carbone égal ou supérieur à 10 tels que le pétrole brut, les huiles minérales notamment les huiles de lubrification et le mazout ainsi qu'éventuellement le gazole.

Il est entendu que l'état physique des hydrocarbures varie également avec la température ambiante, un même hydrocarbure n'ayant pas la même viscosité en plein été et en hiver notamment par une température négative ; de sorte que la sélection, initialement empirique, de la charge de sulfate de calcium partiellement déshydraté, appropriée à chaque cas variera par conséquent en fonction de la température.

On pourra également, sans sortir du cadre de l'invention, compléter le traitement selon le procédé précédemment défini par l'utilisation d'additifs tels que des agents tensio-actifs, des solvants, des dispersants ou des agents de floculation, ceci en fonction de chaque cas particulier ; ces agents pouvant être utilisés dans une phase initiale de mise en oeuvre du procédé, avant l'action du sulfate de calcium déshydraté de l'invention ou éventuellement incorporés dans la charge de sulfate de calcium lui-même.

L'utilisation physique du sulfate de calcium à l'état pulvérulent pourra revêtir elle-même plusieurs formes qui seront adaptées à chaque cas particulier ; d'une façon générale le produit de l'invention, réduit à l'état pulvérulent et dans les gammes de granulométrie précédemment définies, est dispersé à la surface du milieu liquide ou terrestre ayant subi la pollution et qui supporte la phase d'hydrocarbures, ceci jusqu'à ce que ladite phase d'hydrocarbures soit intégralement absorbée par la poudre de sulfate de calcium, en conformant, comme précédemment décrit, un agrégat solide susceptible d'être ramassé par balayage ou précipitant au fond du milieu liquide.

Selon un essai ici décrit, un échantillon de gypse provenant de la carrière de Taverny-Bessancourt, a été broyé pour obtenir les caractéristiques granulométriques suivantes :

| Tamis (mm) | 5 | 2 | 1 | 0,4 | 0,2 | 0,08 | 0,05 |
|---|---|---|---|---|---|---|---|
| Passant (%) | 87,2 | 79,5 | 74,1 | 59,1 | 37,2 | 9,9 | 4,6 |

Une quantité de l'ordre de 1 kg d'échantillon de gypse a été étuvée depuis la température ambiante (environ 20°C) jusqu'à la température désirée.

Les températures maximales de chauffage des échantillons ont été étagées suivant les échantillons entre 130 et 160°C. La durée de montée en température dans l'étuve a été d'environ 1 heure. L'échantillon a été laissé durant 15 minutes à la température maximale de 135'C avant d'être retiré de l'étuve.

Une autre série d'essais a été effectuée sur un échantillon de gypse de même provenance, mais de consistance humide.

Le processus d'essai a été le même que pour la première série d'essais, mais pour tenir compte de l'humidité des produits de départ, les durées de montée en température dans l'étuve ont été d'environ l heure 15 minutes, le palier à la température maximale de 135°C étant de l'ordre d'environ minutes.

Ces échantillons de gypse ont été mis en présence d'une flaque d'huile de vidange.

Il est constaté que la matériau ainsi déshydraté absorbe l'huile de vidange en formant un " dépôt sableux" qu'il est aisé d'éliminer par des moyens mécaniques.

On voit donc qu'une réalisation avantageuse de l'invention comporte une montée en température depuis la température ambiante jusqu'à la température de traitement, pendant une durée comprise entre 45 et 75', suivie d'un palier à la température de traitement compris entre 15' et 30', suivi enfin d'une phase de repos pour refroidissement jusqu'à la température ambiante, dans le cas où le produit n'est pas utilisé immédiatement.

Il est constaté que le produit selon l'invention possède des propriétés spécifiques qui le distinguent du plâtre ; le produit de l'invention possède notamment des propriétés d'absorption, non seulement à l'égard des liquides de nature oléophile, mais également à l'égard de l'eau ; c'est ainsi qu'il ne peut être manipulé à la main sans entraîner un dessèchement extrêmement rapide de la peau qui doit être combattu par une crème de réhydratation ; le produit ne doit donc être manipulé de préférence qu'avec des gants de protection., si la manipulation doit se prolonger.

Compte tenu de la granulométrie qui a été précédemment définie, le produit de l'invention se présente sous la forme de fines ou d'un sable très fin de couleur ocre très clair, ce qui le distingue également du plâtre ; on a constaté par comparaison que le plâtre fabriqué traditionnellement pour les besoins du bâtiment n'a aucun pouvoir effectif d'absorption et n'est donc nullement comparable au produit de l'invention.

Le sulfate semi-hydrate de calcium préparé conformément à l'invention pourra être utilisé non seulement pour les pollutions accidentelles, mais également pour les opérations de dépollution courante telles que le démazoutage des cuves, notamment de bateaux pétroliers ou analogues, ou pour la dépollution de toute surface (humide ou sèche) ayant reçu un dépôt d'hydrocarbures.

Dans tous les cas, le produit de l'invention pourra, après absorption notamment des hydrocarbures, être ramassé étant balayé et aisément pelleté.

De façon remarquable, il a été noté que le produit de l'invention, qui est apte à être stocké dans des centres destinés à assurer la protection civile ou la dépollution, pouvait également être utilisé à titre de produit d'extinction pour lutter contre les incendies ; de sorte que les dépôts ainsi mis en place pourront livrer un produit à plusieurs applications et apte à assurer la dépollution rapide de surface grasses ou huileuses, tout comme à lutter contre des incendies en évitant ainsi d'inonder par des trombes d'eau notamment des locaux habités.

**Revendications**

1 - Procédé pour résorber une pollution résultant notamment de la présence indésirable d'hydrocarbures ou de liquides fortement chargés, telles des eaux résiduaires, éventuellement déversés sur un milieu liquide ou solide, dans lequel on répand à la surface du milieu pollué du sulfate de calcium au moins partiellement déshydraté et le procédé est caractérisé en ce qu'on utilise un sulfate de calcium provenant de la déshydratation au moins partielle du gypse naturel et conduit à un degré de déshydratation convenable par traitement thermique à une température comprise entre 100 et 170° et de préférence entre 130 et 160°.

2 - Procédé selon la revendication 1 et caractérisé en ce que le sulfate de calcium est utilisé à l'état pulvérulent pour produire un effet d'absorption du liquide polluant, sans réhydratation du sulfate de calcium.

3 - Procédé selon la revendication 1 ou la revendication 2, caractérisé en ce que le sulfate de calcium utilisé est déshydraté par un traitement thermique conduit pendant une durée comprise entre 1 et 4 heures et de préférence entre heure 15' et 2 heures.

4 - Procédé selon l'une des revendications 1, 2 ou 3, caractérisé en ce que le traitement thermique est conduit à une température maximum comprise entre 135° et 145° C.

5 - Procédé selon la revendication 4, caractérisé en ce que le traitement thermique comporte une phase de montée en température (au coeur de la matière) depuis la température ambiante jusqu'à la température de déshydratation voisine de 140° C, cette montée en température étant comprise entre 45' et 75', suivie d'un palier à une température voisine de 140° C pendant une durée de 15 à 30'.

6 - Procédé selon la revendication 1 ou la revendication 2, et caractérisé en ce que le sulfate de calcium mis en oeuvre comporte une proportion majoritaire de semi-hydrate

7 - Procédé selon l'une des revendications 2 à 6, caractérisé en ce que le sulfate de calcium utilisé est réduit à une granulométrie comprise entre 1 et 100 microns et de préférence comporte une majorité de particules comprises entre 2 et 50 microns.

8 - Procédé selon l'une des revendications I à 7, caractérisé en ce que l'on prépare plusieurs fractions de sulfate de calcium au moins partiellement déshydraté et qui sont définies en fonction de leur degré de déshydratation, lui-même obtenu par une montée en température plus ou moins élevée, comprise entre 130 et 170°, et par une durée plus ou moins longue comprise entre 1 et 4 heures, un cycle thermique à température élevée et pendant une durée plus longue aboutissant à un degré de déshydratation plus poussée, et on sélectionne par tests, dans les diverses fractions ainsi préparées, la fraction appropriée et adaptée à la résorption par absorption des hydrocarbures spécifiques cause de la pollution objet du traitement.

9 - Procédé selon la revendication 8, et caractérisé en ce que l'on sélectionne une fraction de sulfate de calcium adapté à la pollution traitée en utilisant un produit déshydraté à une température moins élevée et comprise entre 130 et 140°, aboutissant à un pourcentage de déshydratation moins poussée, pour résorber une pollution par des hydrocarbures plus denses et comportant en majorité des fractions lourdes notam-

6

ment caractérisées par un nombre d'atomes de carbone égal ou supérieur à 10.

10 - Procédé selon l'une des revendications 1 à 9 pour résorber une pollution par les hydrocarbures à la surface d'un plan d'eau et caractérisé en ce que le sulfate de calcium à l'état pulvérulent est dispersé à la surface des zones polluées, et laissé jusqu'à précipitation au fond de l'eau sous forme d'agrégat sableux.

11 - Produit industriel nouveau utilisable notamment comme agent de résorption et neutralisation par absorption d'une pollution par les hydrocarbures ou des eaux ou liquides fortement chargés telles que des eaux résiduaires, et caractérisé en ce qu'il est constitué de sulfate de calcium au moins partiellement déshydraté par traitement à une température comprise entre 130 et 160°.

12 - Produit selon la revendication 11 et caractérisé en ce qu'il a été déshydraté à une température comprise entre 135 et 145° par montée en température pendant une durée comprise entre 45 et 75' depuis la température ambiante jusqu'à la température de traitement à laquelle il est laissé pendant un palier compris entre 15 et 30'.

13 - Produit selon la revendication 11 ou 12 et caractérisé en ce qu'il est traité de façon à être amené à l'état pulvérulent et à une granulométrie comprise entre 1 et 100 microns et comportant de préférence une majorité de particules de granulométrie comprise entre 2 et 50 microns.

14 - Produit selon l'une des revendications 11, 12 ou 13 et caractérisé en ce qu'il est constitué d'une proportion majoritaire de sulfate de calcium à l'état semi-hydrate ($Ca\ SO_4\ 1/2\ H_2O$) et d'une proportion minoritaire de sulfate de calcium à l'état de gypse ($Ca\ SO_4\ H_2O$).

15 - Utilisation du produit conforme à l'une des revendications 11 à 14 en tant que produit extincteur pour lutter contre les incendies.

## Office européen
## des brevets

# RAPPORT DE RECHERCHE
# EUROPEENNE

Numéro de la demande

# EP 90 40 2293

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 006 776  (TILLIE)<br>* Revendications 1,6,16,19 *<br><br>– – – | 1,2,6-8 | C 09 K 3/32 |
| A | DE-A-3 644 826  (WARNKE)<br><br>– – – – – | | |

DOMAINES TECHNIQUES
RECHERCHES (Int. Cl.5)

C 09 K

Le présent rapport de recherche a été établi pour toutes les revendications

| Lieu de la recherche | Date d'achèvement de la recherche | Examinateur |
|---|---|---|
| La Haye | 26 novembre 90 | NICOLAS H.J.F. |